# FASCICULE DE BREVET EUROPEEN

(11) **EP 2 534 817 B1**
(45) Date de publication et mention de la délivrance du brevet: **10.07.2013**
(21) Numéro de dépôt: 11702657.5
(22) Date de dépôt: 11.02.2011
(51) Int. Cl.: H04M 1/03, H04M 1/02

(54) **TÉLÉPHONE PORTABLE PRÉSENTANT UN MARQUAGE**
TRAGBARES TELEFON MIT EINER MARKIERUNG
PORTABLE TELEPHONE HAVING A MARKING

(30) Priorité: 12.02.2010 FR 1000598
(43) Date de publication de la demande: 19.12.2012
(73) Titulaire: Option, 3001 Leuven (BE)
(72) Inventeur: ABIVEN, Benoit, F-95806 Cergy Pontoise (FR); JIANPING, Yang, Zhejiang (CN); QINGDE, Kong, Zhejiang (CN)
(74) Mandataire: Sarlet, Steven Renaat Irène
(86) Numéro de dépôt international: PCT/EP2011/052008
(87) Numéro de publication internationale: WO 2011/098548

(56) Documents cités:
- EP-A1- 1 603 308
- EP-A1- 2 058 729
- EP-A2- 1 841 185
- US-A1- 2004 192 225

## Description

La présente invention concerne un téléphone portable qui est pourvu d'un marquage, par exemple représentatif de la marque dudit téléphone, ou de l'opérateur utilisé par ledit téléphone, ou autre.

Plus particulièrement, la présente invention concerne un téléphone portable qui est essentiellement constitué d'une coque prévue pour loger les différents éléments du téléphone et pour pouvoir recevoir, soit sur la face avant du téléphone soit sur sa face arrière, une vitre. Parmi les éléments du téléphone que loge la coque se trouve le haut-parleur qui est généralement monté sur ladite coque, sur la face de la coque qui est opposée à celle qui reçoit la vitre.

Généralement, le marquage dont est pourvu le téléphone est imprimé ou sérigraphié, soit sur la vitre du téléphone, soit au dos de la coque. Le résultat s'avère en définitive banal d'un point de vue esthétique et, au cours du temps, il peut arriver que ce type de marquage se détériore ou disparaisse. Par exemple, ce marquage se salit, se patine, perd de ses couleurs, etc. Par ailleurs, dans le processus de fabrication du téléphone, il nécessite de prévoir une ou plusieurs opérations spéciales uniquement pour ce marquage. De tels exemples de marquage sont connus des documents US 2004/192225, EP 2058729, EP 1603308 et EP 1841185.

On a donc cherché une solution à ces différents problèmes et des moyens qui permettent la présentation d'un marquage de manière originale et esthétique et qui permettent d'éviter de devoir utiliser des opérations spéciales de fabrication de ce marquage. La présente invention concerne un téléphone portable selon la revendication 1.

A cet effet, un téléphone portable selon la présente invention est caractérisé en ce qu'il comporte un système de marquage pour présenter ledit marquage qui est constitué d'une ouverture pratiquée dans la vitre et d'une saillie sur la coque présentant la forme générale du marquage et prévue pour passer à l'intérieur de ladite ouverture, et en ce que ledit haut-parleur est monté au droit du système de marquage, des moyens de transmission étant prévus pour permettre aux ondes sonores émises par ledit haut-parleur d'être transmises par ladite ouverture.

Ainsi, le marquage obtenu n'est pas imprimé ou sérigraphié si bien qu'il ne se détériore pas au fur et à mesure du temps. Par ailleurs, il ne nécessite pas d'opérations supplémentaires dans le processus de fabrication du téléphone dans la mesure où la saillie est obtenue lors du moulage de la coque (seul le moule doit être modifié) et où l'ouverture de la vitre est déjà prévue pour le passage des ondes sonores du haut-parleur.

Avantageusement, la paroi de ladite ouverture présente une forme telle qu'elle épouse, à une certaine distance, la forme du marquage.

Avantageusement, lesdits moyens de transmission sont constitués de trous prévus dans la coque au droit de l'ouverture, sur le côté du marquage.

Avantageusement, ladite coque est en matière plastique, ladite saillie ayant au moins sa face frontale métallisée.

Avantageusement, ladite vitre est montée sur la face avant de ladite coque dudit téléphone.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 est un schéma d'un téléphone portable équipé d'un système de marquage selon la présente invention,
La Fig. 2 est une vue de face agrandie d'un téléphone portable selon la présente invention au niveau de son système de marquage, et
La Fig. 3 est une vue en coupe du système de marquage d'un téléphone portable selon la présente invention.

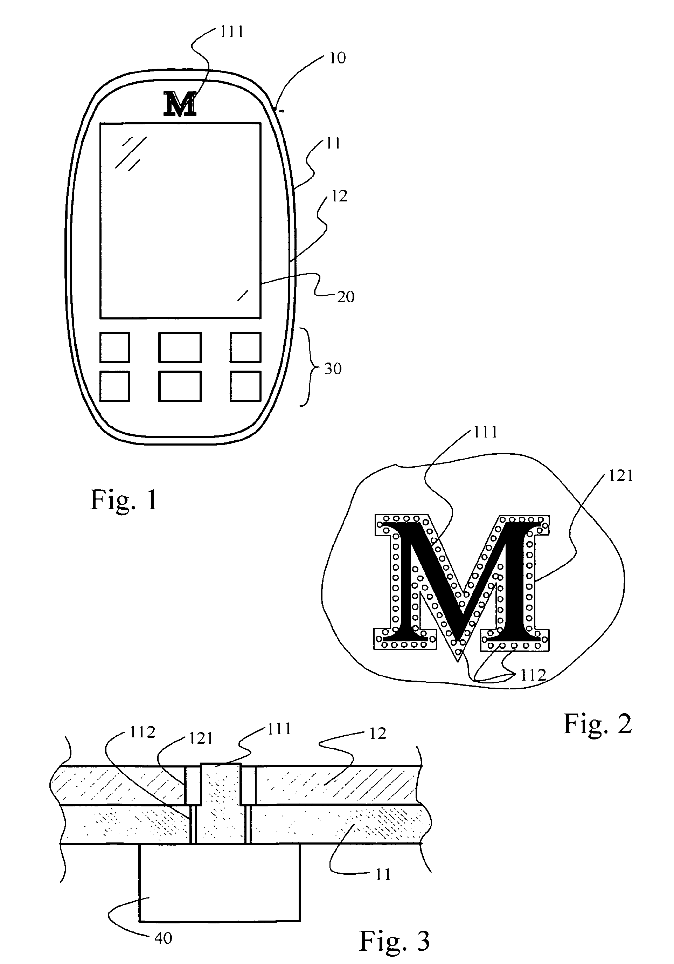

Le téléphone portable représenté à la Fig. 1 est essentiellement constitué d'une coque 11 sur laquelle est monté un écran tactile 20 pour la visualisation de diverses informations et aussi pour entrer des commandes. Peut être également monté sur ladite coque 11, un ensemble de touches ou clavier 30 permettant la mise en fonctionnement de diverses fonctions dudit téléphone telles que la numérotation, la prise ou la coupure de ligne, la visualisation d'un répertoire téléphonique en vue de la numérotation d'un destinataire choisi dans ledit répertoire, etc. Le nombre de touches représentées est ici de six mais on comprendra qu'il pourrait être tout à fait différent sans pour cela dénaturer la présente invention.

La coque 11 est prévue pour loger les différents éléments du téléphone. Elle est également prévue pour pouvoir recevoir une vitre 12 et, pour ce faire, elle est par exemple pourvue d'un épaulement.

Dans certains modes de réalisation, la vitre 12 est montée sur la face avant de la coque 11. La face avant étant la face par laquelle l'écran 20 est visible, cette vitre 12 est, dans ces modes de réalisation, soit une vitre de protection de l'écran 20, soit partie intégrante de l'écran tactile 20. Par exemple, la coque 11 comporte un épaulement sur sa face frontale.

Dans d'autres modes de réalisation, la vitre 12 est montée sur la face arrière de la coque 11. La face arrière étant la face opposée à la face par laquelle l'écran 20 est visible, la vitre 12 est, dans ces modes de réalisation, une vitre de protection. C'est la face arrière de la coque 11 qui, par exemple, comporte alors un épaulement.

Sur le boîtier 10 que forment la coque 11 et la vitre 12, est prévu un marquage M, par exemple représentatif de la marque dudit téléphone, ou de l'opérateur utilisé par ledit téléphone, ou autre.

Comme cela est visible à la Fig. 3, le système de marquage permettant la présentation du marquage M selon la présente invention est constitué d'une ouverture 121 qui est pratiquée dans la vitre 12 et dont la paroi présente avantageusement une forme telle qu'elle épouse, à une certaine distance, de l'ordre de 0.2 à 1mm, la forme du marquage M. A la Fig. 2, on peut voir le pourtour extérieur de l'ouverture 121 qui épouse, à une certaine distance, le marquage M.

Le marquage M est constitué, quant à lui, d'une saillie 111, présentant la forme générale du marquage M et prévue pour passer à l'intérieur de l'ouverture 121 pour que sa face frontale affleure sensiblement la face avant de la vitre 12.

Selon la présente invention, sur la face de la coque 11 qui est opposée à celle qui reçoit la vitre 12, est monté, au droit du système de marquage, le haut-parleur 40 dudit téléphone. Afin que les ondes sonores puissent être transmises à l'extérieur du téléphone, des moyens de transmission, tels que des trous 112, sont prévus dans la coque 11 au droit de l'ouverture 121, sur le côté du marquage M. On voit à la Fig. 2 des trous 112 qui débouchent dans l'espace entre le marquage M et la paroi de l'ouverture 121, ces trous 112 formant lesdits moyens.

Selon un mode de réalisation de la présente invention, la coque 11 est métallique, par exemple en aluminium.

Selon un autre mode de réalisation, la coque 11 est en matière plastique et la saillie 111 prévue sur la coque 11 est métallisée.

## Revendications

1. Téléphone portable constitué d'une coque (11) prévue pour loger les différents éléments du téléphone, ladite coque (11) étant prévue pour pouvoir recevoir une vitre (12) montée sur la face avant de la coque (11), et d'un haut-parleur (40) monté sur la face de la coque (11) qui est opposée à celle qui reçoit la vitre (12), ledit téléphone présentant un marquage M, ledit téléphone portable comportant un système de marquage pour présenter ledit marquage M, ledit haut-parleur (40) est monté au droit du système de marquage, des moyens de transmission étant prévus pour permettre aux ondes sonores émises par ledit haut-parleur (40) d'être transmises par ladite face avant de la coque (11), **caractérisé en ce que** le système de marquage est constitué d'une ouverture (121) pratiquée dans la vitre (12) et d'une saillie (111) sur la coque (11) et obtenue lors du moulage de la coque, présentant la forme générale du marquage M et prévue pour passer à l'intérieur de l'ouverture (121), et **en ce que** les moyens de transmission sont prévus pour permettre aux ondes sonores émises par ledit haut-parleur (40) d'être transmises par ladite ouverture (121).

2. Téléphone portable selon la revendication 1, **caractérisé en ce que** la paroi de ladite ouverture (121) présente une forme telle qu'elle épouse, à une certaine distance, la forme du marquage M.

3. Téléphone portable selon la revendication 1 ou 2, **caractérisé en ce que** lesdits moyens de transmission sont constitués de trous (112) prévus dans la coque (11) au droit de l'ouverture (121), sur le côté du marquage M.

4. Téléphone portable selon une des revendications précédentes, **caractérisé en ce que** ladite coque (11) est en matière plastique, ladite saillie (111) ayant au moins sa face frontale qui est métallisée.

## Patentansprüche

1. Mobiltelefon, das aus einer Schale (11), die dazu vorgesehen ist, die unterschiedlichen Elemente des Telefons unterzubringen, wobei die Schale (11) dazu vorgesehen ist, eine Scheibe (12) aufnehmen zu können, die auf der Vorderseite der Schale (11) montiert wird, und einem Lautsprecher (40) besteht, der auf der Seite der Schale (11) montiert wird, die zu der Seite entgegengesetzt ist, die die Scheibe (12) aufnimmt, wobei das Telefon eine Markierung M aufweist, wobei das Mobiltelefon ein Markierungssystem umfasst, um die Markierung M darzustellen, wobei der Lautsprecher (40) direkt unter dem Markierungssystem montiert wird, wobei Übertragungsmittel vorgesehen sind, um zu ermöglichen, dass die von dem Lautsprecher (40) abgegebenen Schallwellen durch die Vorderseite der Schale (11) übertragen werden, **dadurch gekennzeichnet, dass** das Markierungssystem aus einer Öffnung (121), die in der Scheibe (12) hergestellt ist, und einem Vorsprung (111) auf der Schale (11) besteht und beim Gießen der Schale erhalten wird, die allgemeine Form der Markierung M aufweist und dazu vorgesehen ist, durch das Innere der Öffnung (121) zu verlaufen, und dass die Übertragungsmittel dazu vorgesehen sind, zu ermöglichen, dass die von dem Lautsprecher (40) abgegebenen Schallwellen durch die Öffnung (121) übertragen werden.

2. Mobiltelefon nach Anspruch 1, **dadurch gekennzeichnet, dass** die Wand der Öffnung (121) eine Form aufweist, die sich in einem bestimmten Abstand der Form der Markierung M anpasst.

3. Mobiltelefon nach Anspruch 1 oder 2, **dadurch gekennzeichnet, dass** die Übertragungsmittel aus Löchern (112) bestehen, die in der Schale (11) direkt unter der Öffnung (121) auf der Seite der Markierung M vorgesehen sind.

4. Mobiltelefon nach einem der vorhergehenden Ansprüche, **dadurch gekennzeichnet, dass** die Schale (11) aus Kunststoff ist, wobei der Vorsprung (111) mindestens seine Frontseite hat, die metallisiert ist.

## Claims

1. Portable telephone, comprising a cover (11) provided for housing the different elements of the telephone, said cover (11) being arranged in order to receive a window pane (12) mounted on the front face of the cover (11), and of a loudspeaker (40) mounted on the cover face opposite to the one holding the window pane (12), wherein said telephone has a marking M, wherein said telephone comprises a marking system for exhibiting said marking M, wherein said loudspeaker (40) is mounted perpendicular to the marking system, wherein transmission means are provided for allowing the sound waves emitted by the loudspeaker (40) to be transmitted through said front face of the cover (11), **characterized in that** the marking system consists of an opening (121) arranged in the window pane (12) and a protrusion (111) on the cover (11), obtained during the molding of the cover, having the general shape of the marking M and being arranged to pass through to the inside of the opening (121), and **in that** the transmission means are arranged to allow the sound waves emitted by the loudspeaker (40) to be transmitted through said opening (121).

2. Portable telephone according to claim 1, **characterized in that** the wall of said opening (121) is shaped in such a way that, at a certain distance, it takes the shape of the marking M.

3. Portable telephone according to claim 1 or 2, **characterized in that** said transmission means consist of holes (112) arranged in the cover (11), perpendicular to the opening (121), on the side of the marking M.

4. Portable telephone according to any of the previous claims, **characterized in that** said cover (11) is in a plastic material, said protrusion (111) having at least its front face metallized.
